# EUROPÄISCHE PATENTSCHRIFT

(11) **EP 0 971 862 B1**
(45) Veröffentlichungstag und Bekanntmachung des Hinweises auf die Patenterteilung: **01.10.2003**
(21) Anmeldenummer: 98913718.7
(22) Anmeldetag: 13.03.1998
(51) Int. Cl.: C04B 28/26

(54) **FORMKÖRPER AUS EINEM LEICHTWERKSTOFF, VERFAHREN ZU DEREN HERSTELLUNG UND IHRE VERWENDUNG**
LIGHTWEIGHT SUBSTANCE MOLDED BODY, METHOD FOR THE PRODUCTION AND USE THEREOF
CORPS MOULE EN MATERIAU LEGER, PROCEDE PERMETTANT DE LE PRODUIRE ET SON UTILISATION

(30) Priorität: 26.03.1997 DE 19712835
(43) Veröffentlichungstag der Anmeldung: 19.01.2000
(73) Patentinhaber: FRAUNHOFER-GESELLSCHAFT ZUR FÖRDERUNG DER ANGEWANDTEN FORSCHUNG E.V., 80636 München (DE); Gips-Schüle-Stiftung, 70372 Stuttgart (DE)
(72) Erfinder: GÖDEKE, Holger, D-88480 Achstetten (DE); WERNER, Jürgen, D-70569 Stuttgart (DE); BABUKE, Gerhard, D-71263 Weil der Stadt (DE)
(74) Vertreter: Pfenning, Meinig & Partner
(86) Internationale Anmeldenummer: EP9801485
(87) Internationale Veröffentlichungsnummer: WO98042633

(56) Entgegenhaltungen:
- EP-A- 0 658 528
- DE-A- 2 034 449
- DE-A- 2 252 488
- DE-A- 3 217 260
- GB-A- 2 166 427
- PATENT ABSTRACTS OF JAPAN vol. 097, no. 007, 31.Juli 1997 & JP 09 059077 A (RIBOOLE:KK), 4.März 1997,
- PATENT ABSTRACTS OF JAPAN vol. 097, no. 005, 30.Mai 1997 & JP 09 002881 A (RIBOOLE:KK), 7.Januar 1997,

## Beschreibung

Die Erfindung betrifft einen Formkörper aus Leichtwerkstoff, der ein Sinterprodukt aus einem Leichtzuschlagstoff und einem wasserlöslichen Silikat enthält. Die Erfindung betrifft weiterhin ein Verfahren zur Herstellung derartiger Formkörper und deren Verwendung.

Seit Jahren sind auf dem Baustoffsektor leichtzuschlagstoffhaltige Produkte etabliert. Diese Stoffe werden vornehmlich zur Senkung der Wärmeleitfähigkeit der Bauprodukte eingesetzt. Dabei werden die Leichtzuschlagstoffe beispielsweise in Beton (Leichtbeton), in Ziegelmassen oder in Putzsysteme eingebracht. Mit Hilfe dieser anorganischen Matrixmaterialien können mechanisch belastbare, nichtbrennbare Formkörper gestellt werden, deren wärmetechnische Eigenschaften gegenüber dem reinen Matrixmaterial verbessert sind.

Insbesondere in den Vereinigten Staaten werden Leichtzuschlagstoffe, z.B. Perlite mit Wasserglas, zu Dämmstoffplatten gebunden, in Haushaltsgeräten (Kaffemaschinen) zum Einsatz kommen. Die Produkte besitzen eine geringe Druckfestigkeit (O_{D}<0,5 N/mm²) und sind nicht wasserfest. Vielfach werden Wassergläser als Bindemittel bei der Herstellung von Leichtzuschlagstoffen (Blähglas) verwendet, wobei das Bindemittel für die Gewinnung des Rohgranulats benötigt wird (EPOS 084 634). Diese Produkte werden in Putzund Mörtelsystemen verwendet. Aus den Druckschriften DE 41 14 755 A1, DE 44 32 019 A1 sowie der DE 44 36 981 A1 ist die Verwendung von Wassergläsern als Bindemittel oder Brandschutzmittel für Dämmleichtbauplatten aus Papier oder Altpapier bekannt. In der DE 33 03 204 ist die Herstellung feuerfester, strahlenabweisender Leichtbauplatten und Formteile beschrieben. Das Verfahren ist dadurch gekennzeichnet, daß die verwendeten mineralischen Füllstoffe, Perlite oder Blähschiefer, Kaolin und ggf. Mineralfasern, Härter und als Bindemittel Wasserglas, das ein Treibmittel enthält, bei Raumtemperatur unter Aufschäumen des Wasserglases in einem Mischer homogenisiert werden, danach zu Formkörpern gepreßt und bei einer Temperatur von zirka 150 °C getrocknet werden. Auch diese Systeme sind durch eine mangelhafte Wasserbeständigkeit gekennzeichnet.

In der DE 37 22 242 C1 wird die Herstellung von keramischen Erzeugnissen aus Ton, Kaolin, Quarzmehl, Feldspat o.ä. Flußmitteln, Talkum und nicht näher spezifizierten basischen Rohstoffen erläutert. Dabei wird eine durch einen Verflüssiger gießfähig ausgerüstete Masse mit einem Anteil <1 Gew.-% Wasserglas und Härter versetzt, getrocknet und gebrannt. Bei diesem Verfahren wird Wasserglas als Verflüssiger und zur Verfestigung der Gießmasse nach der Formgebung zugesetzt, wobei auf ein saugendes Formenmaterial, wie beispielsweise Gips, verzichtet werden kann. Für die Porosierung werden übliche Porosierungsmittel, wie z.B. Perlite, Cenospheres, Blähton, Bims oder Kieselgur verwendet. Die getrockneten Produkte werden einem keramischen Brand mit einer Brandtemperatur von ca. 1200 °C unterzogen, wobei die Ausgangskomponenten Ton, Kaolin, Feldspat und Quarz das keramische Scherbenmaterial ausbilden. Demnach erfolgt die Zugabe von Wasserglas ausschließlich zur Verflüssigung und im nachfolgenden Verarbeitungsschritt zur Verfestigung der Gießmasse.

Aus der GB-A-21 66 427 ist ein Formkörper aus Leichtzuschlagstoffen und Wasserglas bekannt.

In der DE 22 52 488 A ist weiterhin eine Platte beschreiben, die durch Mischen von Altglas und Wasserglas hergestellt wird.

Die DE 20 34 449 offenbart Leichtbaustoffe die ebenfalls aus porösen Leichtbaustoffen und Wasserglas oder Bindemittel erhalten werden.

Nachteilig bei den vorbekannten Formkörpern bzw. Bauprodukten, die Leichtzuschlagstoffe enthalten, ist demnach insbesondere, daß bei Steigerung des Zuschlagstoffgehaltes eine drastische Reduktion der Festigkeiten eintritt. Die bisher bekannten Formkörper bzw. Bauprodukte sind demnach nur bedingt für Dämmstoff-Formkörper, Mauersteine oder dergleichen geeignet.

Ausgehend hiervon ist es die Aufgabe der vorliegenden Erfindung, einen Formkörper vorzuschlagen, der im wesentlichen anorganischer Natur ist und der sich gleichzeitig durch eine geringe Dichte, gute Wasserund Säurebeständigkeit sowie durch eine hohe mechanische Festigkeit auszeichnet. Es ist weiterhin eine Aufgabe der vorliegenden Erfindung, ein entsprechen-des Verfahren zur Herstellung derartiger Formkörper sowie deren Verwendung anzugeben.

Die Aufgabe wird in Bezug auf den Formkörper durch die kennzeichnenden Merkmale des Anspruchs 1, in Bezug auf das Verfahren zur Herstellung der Formkörper durch die kennzeichnenden Merkmale des Anspruchs 7 und verwendungsgemäß durch die Merkmale der Ansprüche 11 bis 18 gelöst. Die Unteransprüche zeigen jeweils vorteilhafte Ausgestaltungen auf.

Erfindungsgemäß wird somit vorgeschlagen, daß der Formkörper im wesentlichen aus einem Sinterprodukt, enthaltend 60 bis 95 Gew.-% eines Leichtzuschlagstoffes, mit 40 bis 5 Gew.-% eines wasserlöslichen Silikates gebildet ist. Der erfindungsgemäße, nichtbrennbare anorganische Formkörper zeichnet sich insbesondere durch geringe Dichte, gute Wasser- und Säurebeständigkeit sowie durch eine gleichzeitige, vergleichsweise hohe mechanische Festigkeit aus. Dies ist offensichtlich darauf zurückzuführen, daß die Zuschlagstoffe miteinander versintert sind, wobei sich zwischen den Zuschlagstoffen ein Netzwerk ausbildet, das sich durch hohe Bindungskräfte auszeichnet. Dadurch können im wesentlichen die Eigenschaften der Zuschlagstoffe als solche erhalten bleiben. Dadurch, daß das Sinterhilfsmittel selbst aus einem wasserlöslichen Silikatglas gebildet ist, handelt es sich um einen reinen anorganischen Formkörper. Wesentlich dabei ist, daß das wasserlösliche Silikatglas mehrere Aufgaben erfüllt. So dient es einerseits zur Entstaubung der Zuschlagstoffe sowie auch als temporäres Bindemittel bei der Grünkörperherstellung. Das wasserlösliche Silikat fungiert gleichzeitig auch als Porosierungsmittel. Wesentlich ist jedoch, daß das wasserlösliche Silikatglas als Sinterhilfsmittel wirkt. Durch die Verwendung von wasserlöslichen Silikaten ist während des Sinter Vorgangs die Entstehung einer Flüssigphase möglich, deren Erweichungstemperatur niedriger ist als die Erweichungstemperatur der Zuschlagstoffe. Somit können die Leichtzuschläge miteinander versintert werden, ohne daß ihr Porengefüge zerstört wird. Unter Verwendung eines minimierten Silikatgehaltes entsteht somit ein haufwerksporiges Gefüge, bei dem die Zuschlagstoffe ausschließlich an den Kontaktstellen miteinander versintert sind.

Dadurch ist es auch möglich, daß der erfindungsgemäße Formkörper einen äußerst hohen Anteil an Zuschlagstoffen (60 bis 95 Gew.-%, bevorzugt 80 bis 93 Gew.-%) enthält. Damit wird sichergestellt, daß die Eigenschaften des Formkörpers im wesentlichen durch die Natur des Leichtzuschlagstoffes selbst bestimmt sind.

Beim erfindungsgemäßen Formkörper ist weiterhin hervorzuheben, daß dessen Eigenschaften sich in einem weiten Bereich durch die Auswahl des Leichtzuschlagstoffes und der Sinterbedingungen variieren läßt. So ist es möglich. Formkörper herzustellen, deren Trokkenrohdichte im Bereich von 150 bis 750 kg/m³ liegt. Die Auswahl der entsprechenden Trockenrohdichte erfolgt dabei je nach Anwendungsfall. Die Druckfestigkeit der erfindungsgemäßen Formkörper liegt im Bereich von 0,1 bis 15 N/mm².

Der erfindungsgemäße Formkörper wird aus Leichtzuschlagstoffen ausgewählt aus Blähglas, Perlite, Vermiculite, Blähton, Cenospheres und/oder Kieselgur hergestellt.

Bei den Alkalisilikat, losungen sind Wasserglas, insbesondere Natronwasserglas und Kaliwasserglas günstig. Wassergläser sind im Gegensatz zu Standardgläsern, wie beispielsweise Behältergläser, löslich in alkalischen Lösungen und Wasser. Diese Löslichkeit liegt u.a. darin begründet, daß in ihrem Netzwerk Alkalionen eingelagert sind, welche die chemische Beständigkeit herabsetzen. Da die meisten anorganischen Leichtzuschlagstoffe (z.B. Blähglasgranulat, Blähton, Perlite etc.) ebenfalls Erdalkalioxide beinhalten, kann sich bei der Flüssigphasensinterung, die zur Herstellung der Formkörper erforderlich ist, aus dem Wasserglas ein Natronkalkglas bilden, wodurch die gute Wasserbeständigkeit verursacht wird.

Die Erfindung betrifft weiterhin ein Verfahren zur Herstellung der vorstehend beschriebenen Formkörper.

Zur Herstellung eines erfindungsgemäßen Formkörpers ist es dabei lediglich erforderlich, den Leichtzuschlagstoff und das Sinterhilfsmittel zu mischen und nach einem Formgebungsprozeß bei 400 bis 1.000 °C über eine Zeitspanne von 0,1 bis 5 h zu sintern. Wesentlich beim Anmeldungsgegenstand ist es, daß durch die Variation der Prozeßparameter, d.h. durch die Sinterbedingungen, die Eigenschaften des Formkörpers, wie Druckfestigkeit und Trockenrohdichte, Wärmeleitfähigkeit, Strömungswiderstand und Schallabsorptionsgrad beeinflußt werden können. Es hat sich dabei als vorteilhaft erwiesen, wenn nach der Formgebung und vor dem Sintern noch eine separate Trocknung bei 50 bis 95 °C durchgeführt wird. Bevorzugte Prozeßparameter für den Sinterprozeß sind 550 bis 850 °C und eine Sinterzeit von 0,1 bis 0,5 h.

Nachfolgend wird die Herstellung eines Formkörpers näher beschrieben.

Der Leichtzuschlagstoff wird unter Verwendung eines Intensivmischers, z.B. Pflugscharmischer oder Gegenstrommischer, mit dem Sinterhilfsmittel vermengt, wobei das Sinterhilfsmittel vorzugsweise in die Mischkammer des Mischers verdüst wird. Je nach Art des verwendeten Leichtzuschlagstoffes und des zu erzielenden Porengefüges werden 5 bis 40 % wasserlöslicher Alkalisilikats als sinterhilfsmittel zugesetzt. Die erhaltene Mischung wird zur Formgebung in Formen gefüllt, eingerüttelt oder durch uni-, biaxiales- oder isostatisches Pressen verdichtet. Eine Verdichtung durch Extrudieren der plastischen Formmasse ist ebenfalls möglich. Während des nach der Formgebung stattfindenden Trocknungsvorganges (Trocknungstemperatür ca. 90 °C) kondensieren die Alkalisilikate unter Ausbildung eines wasserlöslichen Silikatgerüstes. Durch die Zugabe von entsprechenden Härtern wie beispielsweise Aluminiumphosphate kann bekanntermaßen dieser Vorgang beschleunigt werden. Die so entstandenden Grünkörper werden in einer nachgeschalteten Temperaturbehandlung gesintert, wobei bei Temperaturen zwichen 550 und 900 °C die einzelnen Leichtzuschlagpartikel miteinander versintern. Dieser Flüssigphasensinterungsprozeß prägt maßgeblich das Porengefüge. So können durch Variation der Porosität, der Porengrößenverteilung sowie der Art der Poren die bauphysikalischen Eigenschaften wie beispielsweise Schallabsorptionsvermögen oder Wärmeleitfähigkeit sowie die Festigkeit variiert werden. Mit einer Aufheizrate von ca. 30 min. bei der maximalen Sintertemperatur können Bauteile innerhalb eines Rohdichtebereiches von 150 bis 750 kg/m³ erzeugt werden. Eine' spanabhebende Nachbearbeitung durch Sägen, Schleifen oder Bohren kann entweder vor oder nach dem Sintervorgang erfolgen.

Folgende Beeinflussungsparameter für die Gestaltung des Gefüges können variiert werden:
- Art des Leichtzuschlagstoffes
- Korngrößenverteilung des Leichtzuschlagstoffes
- Art und Menge des Sinterhilfsmittels
- Vorverdichtung bei der Formgebung
- Sinterprozeß

Der große Vorteil des erfindungsgemäßen Verfahrens ist somit darin zu sehen, daß durch die große Variationsmöglichkeit, sowohl im Hinblick auf die Zuschlagstoffe als auch auf die Prozeßparameter, Formkörper für die;unterschiedlichsten Anwendungen hergestellt werden können. Aufgrund der Ausbildung des anorganischen Netzwerkes im Formkörper selbst, das durch die Leichtzuschlagstoffe bestimmt wird, sind die Formkörper insbesondere als Dämmstoff-Formkörper geeignet. Derartige druckbelastbare Dämmstoff-Formkörper bestehen aus reinen anorganischen faserfreien Werkstoffen, die spanabhebend, z.B. durch Sägen und Bohren bearbeitet werden können. Sie vereinen somit die Vorzüge anorganischer Produkte wie Nichtbrennbarkeit, Verrottungsresistenz etc. mit den Anwendungsund Verarbeitungsvorteilen von Hartschäumen auf der Basis von PU oder PS. Demzufolge stehen diesen Produkten weite Anwendungsfelder im Bereich der Wärmedämmung, Kältedämmung, Brandschutztechnik und Akustik offen. Durch den Flüssigphasensinterungsprozeß können leichtzuschlagstoffhaltige Formkörper erzielt werden, deren mechanische Eigenschaften vergleichbar sind mit herkömmlichen Mauersteinen bei gleichzeitig verbesserten wärmetechnischen Eigenschaften. Somit ist es mit dem erfindungsgemäßen Werkstoff möglich, ein einschaliges, monolithisches, hochwärmedämmendes Mauerwerk auszubilden, ohne eine zusätzliche Erhöhung der Mauerwerkstätte in Kauf nehmen zu müssen.

Mit Hilfe einer Variation der Prozeßparameter sowie einer entsprechenden Auswahl der Leichtzuschlagstoffe kann das Werkstoffgefüge, vornehmich die Dichte und Porosität, variiert werden. So lassen sich hochporosierte Mauersteine ohne laststragende Funktion zur Ausfachung von Fachwerken herstellen, ohne den Nachteil eines zusätzlichen Feuchteeintrags, wie er von Porenbeton bekannt ist, in Kauf nehmen zu müssen. Werden die o.g. Parameter dahingehend variiert, daß die mechanischen Eigenschaften, z.B. Druckfestigkeit, primär gesteigert werden, so entstehen druckbelastbare Dämmstoffe für den Ingenieurbau, z.B. Kragelemente, Stützen. Aufgrund der anorganischen Struktur sowie der flexiblen Formgebungsmöglichkeit durch Pressen, Gießen, spanabhebende Bearbeitung u.ä. können wärmedämmende Brandschutzelemente mit den unterschiedlichsten Geometrien realisiert werden. Diese Vorzüge könnten auch bei der Verwendung für die Herstellung von Abgasesystemen in Haus- oder Industriefeuerungsanlagen vorteilhaft sein. Werden Leichtzuschlagstoffe mit einer hohen Glasübergangstemperatur sowie entsprechend darauf abgestimmte Alkalisilikate verwendet, so ist es möglich, Brennhilfsmittel oder gar feuerfeste Ofenauskleidungen erzielen.

Da die vorhandene Offenporigkeit der Leichtzuschlagschüttungen weitgehend erhalten bleibt, werden auch ihre schallabsorbierenden Eigenschaften nicht beeinträchtigt. Durch eine Variation von Korngröße, Temperatur und der Verdichtung bei der Herstellung sind die die Schallabsorption frequenzabhängig beeinflussenden Größen Strömungswiderstand, Porosität und Strukturfaktor einstellbar. Beachtliche Festigkeit, Kantenstabilität, Baustoffklasse A1, Umweltneutralität und dennoch einfache Herstellbarkeit, Formgebung und Bearbeitbarkeit sind durch den Sinterungsprözeß erreichbar. Diese schallabsorbierenden Werkstoffe dienen der Herstellung von vorzugsweise schallabsorbierenden Bauteilen als Wand- bzw. Deckenelementen, Baffles, Schalldämpfer-Kulissenelementen, Segmente für feste Fahrbahnen von Schienenfahrzeugen sowie Formteile in Abgasleitungen.

Unter Verwendung von Leichtzuschlagstoffen mit einer sehr geringen Wärmeleitfähigkeit wie beispielsweise expandiertes Perlit können großformatige anorganische Dämmstoffplatten mit einer geringen Wärmeleitfähigkeit von 0,06 W/mK erzeugt werden, die beispielsweise als Putzträgerplatten Verwendung finden können.

Bedingt durch die anorganische Struktur dieser Dämmstoffe, gepaart mit der hohen Temperaturbeständigkeit, eignen sich derartige Produkte auch für den technischen Brandschutz, z.B. in Brandschutztüren.

Da mit dem erfindungsgemäßen Herstellungsverfahren ein offenporiges Gefüge mit definiertem Durchmesser erzielt werden kann, können auch Filterelemente oder Katalysatorenträgerwerkstoffe für die chemische Technologie maßgeschneidert werden.

Die Erfindung wird nachfolgend anhand dreier Figuren und mehrerer Ausführungsbeispiele näher erläutert.

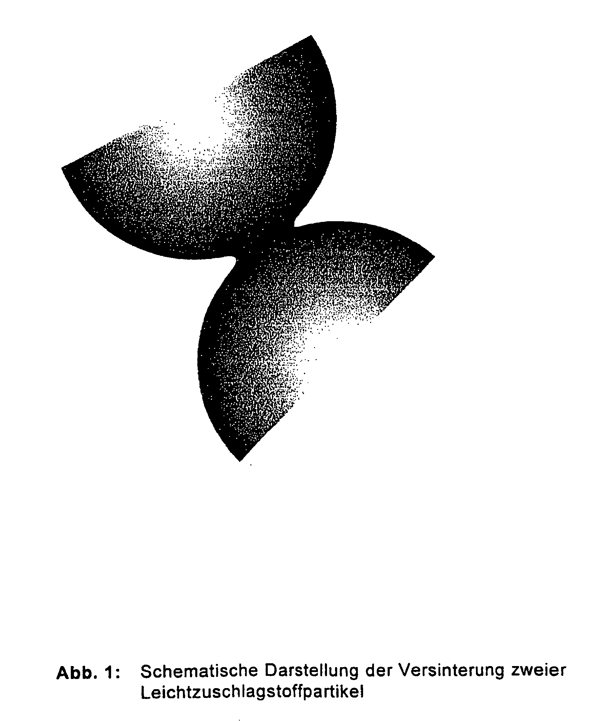

- Fig. 1: zeigt in schematischer Darstellung die Versinterung zweier Leichtzuschlagstoffpartikel untereinander.

Aus Fig. 1 ist deutlich die Ausbildung eines Sinterhalses zwischen den Leichtzuschlagstoffpartikeln zu erkennen.

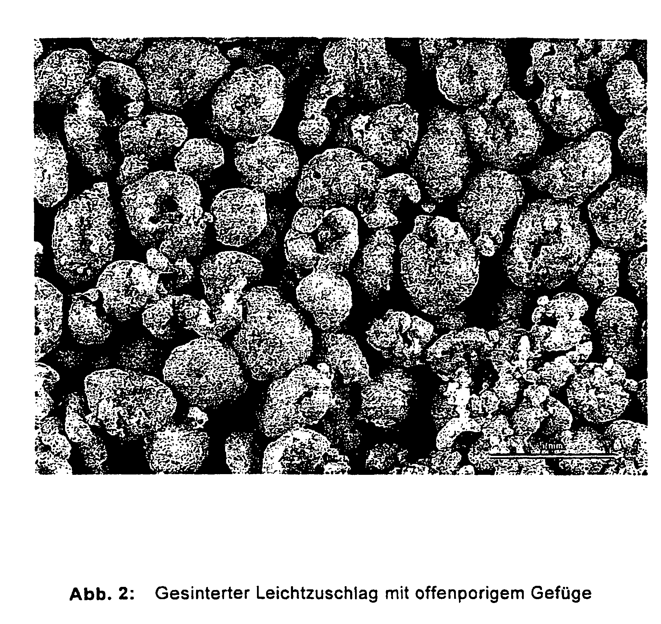

- Fig. 2: zeigt ebenfalls schematisch ein offenporiges Gefüge eines gesinterten Leichtzuschlagstoffes.

Das in Fig. 2 dargestellte Gefüge weist eine Dichte von 300 kg/m³ auf. Aus Fig 2 ist sehr deutlich die Ausbildung eines offenporigen Netzwerkes zu erkennen.

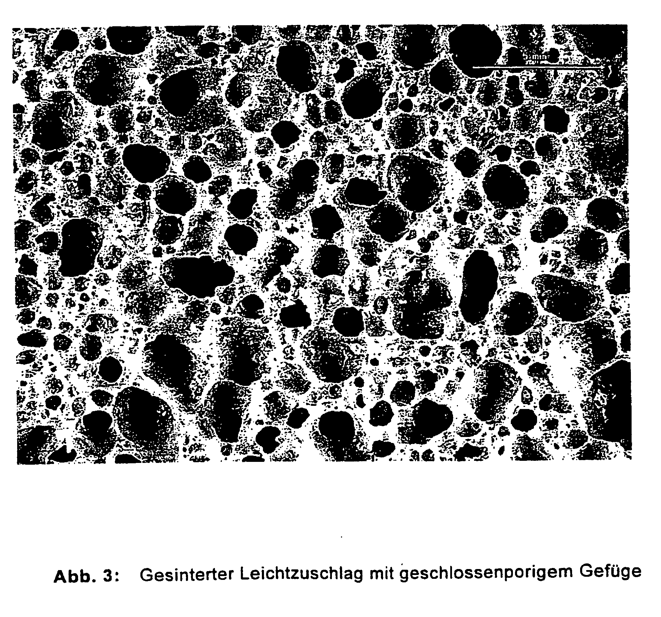

- Fig. 3: zeigt nun im Gegensatz zu Fig. 2 ein geschlossenporiges Gefüge mit einer Dichte von 500 kg/m³.

Der Vergleich von Fig. 2 und Fig. 3 macht deutlich, daß es mit dem erfindungsgemäßen Herstellungsverfahren über die Auswahl der Zuschlagstoffe und insbesondere der Sinterbedingungen möglich ist, die Eigenschaften des Formkörpers in weiten Bereichen zu variieren.

Die nachfolgenden Beispiele erläutern die Erfindung näher:

### Beispiele 1

92 Gew.-Teile Blähglasgranulat aus Altglas (Poraver, 1 bis 2 mm) werden mit 8 Gew.-Teilen in Waser gelöstem Natriumtetrasilikat (molarer Modul 4,0) in einem Pflugscharmischer vermengt. Die so erhaltene Mischung wird in Formen verfüllt und mit einem Preßdruck von ca. 2 bar axial verdichtet. Nach Abschluß der Trocknung (80 °C/8 h) erfolgt die Sinterung bei 720 °C in oxidierender Atmosphäre. Der so entstandene Werkstoff weist ein haufwerksporiges Gefüge mit einer Rohdichte von ca. 400 kg/m³ auf, das sich insbesondere durch einen hohen Absorptionsgrad (α > 0,8 bei 500 bis 1000 Hz), gepaart mit einer hohen Druckfestigkeit von ca. 3,5 MPa auszeichnet. Das säurebeständige, wasserfeste und frosttauwechselbeständige Material eignet sich bestens für die Verwendung als nichtbrennbarer Schallabsorber, wie sie bei vielen verkehrstechnischen Anlagen, z.B. Farhrbahnauskleidungen von Schienenfahrzeugen, verwendet werden. Bedingt durch die Säurbeständigkeit (durch 24 h bei 95 °C, 70 % H₂SO₄ tritt weder ein säureangriffbedingter Massen- oder Festigkeitsverlust auf) sind derartige faserfreie, nichtbrennbare Absorbermaterialien auch für den Einsatz als Schalldämpfer für Feuerungsanlagen, z. B. in Kraftwerken, prädestiniert.

### Beispiel 2

85 Gew.-Teile thermisch expandiertes Perlite wird mit 15 Gew.-Teilen in Wasser gelöstem Natrondisilikat (molarer Modul 2,0) in einem Pflugscharmischer so vermengt, daß eine Schädigung des Leichtzuschlagstoffes unterbleibt. Unter Verwendung eines Preßdruckes von 0,5 bar und einer Trocknungstemperatur von 80 °C erhält man Grünkörper, die nach einer Sinterung bei 740 °C in oxidierender Atmosphäre eine geringe Rohdichte von ca. 200 kg/m³ aufweisen. Dieser leichte, wasserfeste, haufwerksporige Werkstoff weist einen hohen Schallabsorptionsgrad (α >0,8 bei 500 bis 1000 Hz) auf, weshalb er vornehmlich für Akustikplatten, Baffles, d.h. Produkte, die von den Raumdecken abgehängt werden, eingesetzt werden können.

92 Gew.-Anteile Liaver-Leichtzuschlagstoff werden mit 8 Gew.-Teilen in Wasser gelöstem Natriumtetrasilikat (molarer Modul 4,0) in einem Intensivmischer vermengt und mit einem Preßdruck von 2 bar verdichtet. Nach der Sinterung bei 780 °C entstehen Absorberwerkstoffe, die bis zu einer Temperatur von 700 °C verwendet werden können. Demzufolge sind diese Produkte für die Verwendung in Schalldämpfern von Kraftfahrzeugen einsetzbar, die Temperaturbelastungen bis ca. 700 °C widerstehen können und stellen somit eine Alternative für die bislang verwendeten mineralfaserhaltigen Absorber dar, die gemäß TRGS 905 in Verdacht stehen, kanzerogen zu sein.

### Beispiel 3

92 Gew.-Teile Blähglas (Mizziglas, Mizzi AG) werden mit 8 Gew.-Teilen in Wasser gelöstem Natriumtetrasilikat (molarer Modul 4,0) vermengt und mit einem Preßdrück von 5 bar verdichtet. Durch eine Sintertemperatur von 850 °C entsteht ein druckbelasteter Dämmstoff mit einem geschlossenporigen Gefüge. Diese Produkte mit einer Rohdichte von ca. 500 kg/m³ weisen ein überwiegend geschlossenzelliges Gefüge auf, das zu einer hohen Druckfestigkeit von 10 MPa führt. Gleichzeitig werden Wärmeleitfähigkeiten von 0,13 W/mK erzielt. Diese Baustoffe eignen sich vornehmlich für die Ausbildung von druckbelastbaren, wärmedämmenden Bauteilen, z.B. Kragelemente, wie sie bei der Herstellung von Balkonen oder Veranden Verwendung finden.

### Beispiel 4

91 Gew.-Teile Blähglasgranulat (Poraver, 1 bis 2) werden mit 9 Gew.-Teilen Natronwasserglas vermengt und in Formen gefüllt. Die Formgebung erfolgt durch einen axialen Preßvorgang mit einem Preßdruck von 0,4 bar. Im Anschluß an die Trocknung bei 80 °C erfolgt die Sinterung bei 760 °C in Luft. Der derartig hergestellte Werkstoff besitzt eine Rohdichte von ca. 300 kg/m³, wodurch eine Wärmeleitfähigkeit λ 0,078 W/mK und eine Druckfestigkeit von ca. 1 MPa gegeben sind. Insbesondere Bereiche in denen der Dämmstoff keine lastabtragende Funktion übernehmen muß, wie beispielsweise die Ausfachung von Holzständerkonstruktionen, Fachwerken etc., stellen ein ideales Anwendungsgebiet für derartige Werkstoffe dar.

## Patentansprüche

1. Formkörper aus einem Leichtwerkstoff, der aus einem Leichtzuschlagstoff und einem Sinterhilfsmittel gebildet ist,
**dadurch, gekennzeichnet,**
**daß** der Leichtwerkstoff ein Sinterprodukt, ist das erhalten worden ist durch Mischen von 60 bis 95 Gew.-% eines Leichtzuschlagstoffes, ausgewählt aus Perlite, Blähton, Blähglas, Vermiculite, Cenospheres und Kieselgur und/oder deren Mischungen mit 40 bis 5 Gew.-% einer wässrigen Alkalisilikatlösung, wobei der Leichtzuschlagstofff ausschließlich an den Kontaktstellen unter Erhalt seiner wesentlichen Eigenschaften netzwerkartig verbunden ist.

2. Formkörper nach Anspruch 1,
**dadurch gekennzeichnet, daß** die Trockenrohdichte im Bereich von 150 bis 750 kg/m³ liegt.

3. Formkörper nach Anspruch 1 oder 2,
**dadurch gekennzeichnet, daß** die Druckfestigkeit im Bereich von 0,1 bis 15 N/mm² liegt.

4. Formkörper nach mindestens einem der Ansprüche 1 bis 3,
**dadurch gekennzeichnet, daß** das Sinterprodukt aus 93 bis 80 Gew.-% des Leichtzuschlagstoffes und 7 bis 20 Gew.-% des wasserlöslichen Alkalisilikates gebildet ist.

5. Formkörper nach mindestens einem der Ansprüche 1 bis 4,
**dadurch gekennzeichnet, daß** das wasserlösliche Silicat ausgewählt ist aus Alkalisilikaten, insbesondere Wasserglas, insbesondere Natronwasserglas und Kaliwasserglas.

6. Verfahren zur Herstellung eines Formkörpers nach mindestens einem der Ansprüche 1 bis 5,
**dadurch gekennzeichnet , daß** der Leichtzuschlagstoff und das Bindemittel nach Mischung einem Formgebungsprozeß unterzogen wird und bei 400 °C bis 1000 °C über eine Zeitspanne von 0,1 h bis 5 h gesintert wird.

7. Verfahren nach Anspruch 6,
**dadurch gekennzeichnet, daß** die Trockenrohdichte und/oder die Druckfestigkeit in Abhängigkeit des Leichtzuschlagstoffes und der Prozeßparameter beim Sintern eingestellt wird.

8. Verfahren nach Anspruch 6 oder 7,
**dadurch gekennzeichnet, daß** nach der Formgebung und vor dem Sintern eine Trocknung bei 50 °C bis 95 °C durchgeführt wird.

9. Verfahren nach mindestens einem der Ansprüche 6 bis 8,
**dadurch gekennzeichnet, daß** der Sinterprozeß bei 550 °C bis 850 °C durchgeführt wird.

10. Verfahren nach mindestens einem der Ansprüche 6 bis 9,
**dadurch gekennzeichnet, daß** die Sinterung während einer Zeitspanne von 0,1 h bis 0,5 h erfolgt.

11. Verwendung eines Formkörpers nach mindestens einem der Ansprüche 1 bis 5 als Dämmstoff-Formkörper.

12. Verwendung der Formkörper nach mindestens einem der Ansprüche 1 bis 5 als Baumaterial, insbesondere als Mauersteine.

13. Verwendung der Formkörper nach mindestens einem der Ansprüche 1 bis 5 als Ofenauskleidung.

14. Verwendung der Formkörper nach mindestens einem der Ansprüche 1 bis 5 für Formsteine für die Eildung von Abgasanlagen.

15. Verwendung der Formkörper nach mindestens einem der Ansprüche 1 bis 5 für technischen Schallschutz in Innenräumen.

16. Verwendung der Formkörper nach mindestens einem der Ansprüche 1 bis 5 für schallabsorbierende Segmente für feste Fahrbahnen von Schienenfahrzeugen.

17. Verwendung der Formkörper nach mindestens einem der Ansprüche 1 bis 5 als Brandschutzelement

18. Verwendung der Formkörper nach mindestens einem der Ansprüche 1 bis 5 als Schalldämpfer in Abgasleitungen.

## Claims

1. A moulded body made from a lightweight material, which is formed from a lightweight aggregate and a sintering aid,
**characterised in that** the lightweight material is a sintered product obtained by mixing 60 to 95% by weight of a lightweight aggregate, selected from perlite, expanded clay, expanded glass, vermiculite, cenospheres and kieselguhr and/or mixtures thereof with 40 to 5% by weight of an aqueous alkali silicate solution, in which the lightweight aggregate is connected in the manner of a network exclusively at the points of contact, maintaining its essential properties.

2. A moulded body according to Claim 1, **characterised in that** the dry bulk density is in the range between 150 and 750 kg/m³.

3. A moulded body according to Claim 1 or 2, **characterised in that** the compressive strength is in the range between 0.1 and 15 N/mm².

4. A moulded body according to at least one of Claims 1 to 3, **characterised in that** the sintered product is formed from 93 to 80% by weight of the lightweight aggregate and 7 to 20% by weight of the water-soluble alkali silicate.

5. A moulded body according to at least one of Claims 1 to 4, **characterised in that** the water-soluble silicate is selected from alkali silicates, in particular water glass, in particular soda water glass and potassium water glass.

6. A process for making a moulded body according to at least one of Claims 1 to 5, **characterised in that**, after mixing, the lightweight aggregate and the binder are subjected to a shaping process and are sintered for a period between 0.1 h and 5 h at 400°C to 1000°C.

7. A process according to Claim 6, **characterised in that** the dry bulk density and/or the compressive strength are adjusted during sintering in dependence on the lightweight aggregate and the process parameters.

8. A process according to Claim 6 or 7, **characterised in that**, after the shaping and before the sintering, drying is carried out at 50°C to 95°C.

9. A process according to at least one of Claims 6 to 8, **characterised in that** the sintering process is carried out at 550°C to 850°C.

10. A process according to at least one of Claims 6 to 9, **characterised in that** the sintering takes place for a period between 0.1 h and 0.5 h.

11. Use of a moulded body according to at least one of Claims 1 to 5 as an insulating moulded body.

12. Use of the moulded bodies according to at least one of Claims 1 to 5 as a construction material, in particular as bricks.

13. Use of the moulded bodies according to at least one of Claims 1 to 5 as a furnace lining.

14. Use of the moulded bodies according to at least one of Claims 1 to 5 for moulded bricks for forming waste gas systems.

15. Use of the moulded bodies according to at least one of Claims 1 to 5 for industrial sound-proofing in interiors.

16. Use of the moulded bodies according to at least one of Claims 1 to 5 for sound-absorbent segments for fixed railways for rail-mounted vehicles.

17. Use of the moulded bodies according to at least one of Claims 1 to 5 as a fire-retardant element.

18. Use of the moulded bodies according to at least one of Claims 1 to 5 as a silencer in exhaust pipes.

## Revendications

1. Corps de forme en une matière légère qui est formée d'agrégats légers et d'un auxiliaire de frittage, **caractérisé en ce que** la matière légère est un produit de frittage qui a été obtenu par mélange de 60 à 95 % en poids d'agrégats légers, choisis parmi la perlite, l'argile expansée, le verre expansé, la vermiculite, les cénosphères et la diatomite et/ou des mélanges de ceux-ci, avec 40 à 5 % en poids d'une solution aqueuse de silicate alcalin, les agrégats légers étant liés à la façon d'un réseau exclusivement à l'endroit des emplacements de contact en fournissant leurs propriétés essentielles.

2. Corps de forme suivant la revendication 1, **caractérisé en ce que** la masse volumique apparente à sec est comprise dans la fourchette de 150 à 750 kg/m³.

3. Corps de forme suivant la revendication 1 ou 2, **caractérisé en ce que** la résistance à la compression est comprise dans la fourchette de 0,1 à 15 N/mm².

4. Corps de forme suivant au moins l'une des revendications 1 à 3, **caractérisé en ce que** le produit de frittage est formé de 93 à 80 % en poids des agrégats légers et de 7 à 20 % en poids du silicate alcalin soluble dans l'eau.

5. Corps de forme suivant au moins l'une des revendications 1 à 4, **caractérisé en ce que** le silicate soluble dans l'eau est choisi parmi des silicates alcalins, notamment un verre soluble, notamment silicate de soude et silicate de potassium.

6. Procédé d'élaboration d'un corps de forme suivant au moins l'une des revendications 1 à 5, **caractérisé en ce que**, après mélange, les agrégats légers et le liant sont soumis à un processus de formage et sont frittés entre 400 °C à 1.000 °C pendant une durée de 0,1 h à 5 h.

7. Procédé suivant la revendication 6, **caractérisé en ce que** la masse volumique apparente à sec et/ou la résistance à la compression sont réglées lors du frittage en fonction des agrégats légers et des paramètres de processus.

8. Procédé suivant la revendication 6 ou 7, **caractérisé en ce qu'**après que le formage et avant le frittage, un séchage est effectué entre 50 °C à 95 °C.

9. Procédé suivant au moins l'une des revendications 6 à 8, **caractérisé en ce que** le processus de frittage est exécuté entre 550 °C à 850 °C.

10. Procédé suivant au moins l'une des revendications 6 à 9, **caractérisé en ce que** le frittage a lieu pendant une durée de 0,1 h à 0,5 h.

11. Utilisation d'un corps de forme suivant au moins l'une des revendications 1 à 5 en tant que corps de forme isolant.

12. Utilisation des corps de forme suivant au moins l'une des revendication 1 à 5 en tant que matériau de construction, notamment en tant que pierres de construction.

13. Utilisation des corps de forme suivant au moins l'une des revendications 1 à 5 en tant que revêtement de four.

14. Utilisation des corps de forme suivant au moins l'une des revendications 1 à 5 pour dès pierre de forme pour la formation d'installations d'évacuation de fumée.

15. Utilisation des corps de forme suivant au moins l'une des revendications 1 à 5 un pour une insonorisation technique dans des espaces intérieurs.

16. Utilisation des corps de forme suivant au moins l'une des revendications 1 à 5 pour des segments d'absorption du son pour des voies de roulement fixes de véhicules ferroviaires.

17. Utilisation des corps de forme suivant au moins l'une des revendications 1 à 5 en tant qu'élément d'ignifugeage.

18. Utilisation des corps de forme suivant au moins l'une des revendications 1 à 5 en tant qu'élément d'insonorisation dans des conduits d'évacuation de fumée.
